# EUROPÄISCHE PATENTSCHRIFT

(11) **EP 2 853 558 B1**
(45) Veröffentlichungstag und Bekanntmachung des Hinweises auf die Patenterteilung: **09.11.2016**
(21) Anmeldenummer: 13186373.0
(22) Anmeldetag: 27.09.2013
(51) Int. Cl.: C08K 3/36, B60C 1/00, C08L 9/00, C08L 9/06

(54) **Schwefelvernetzbare Kautschukmischung**
Sulfur crosslinkable rubber composition
Composition de caoutchouc réticulable au soufre

(43) Veröffentlichungstag der Anmeldung: 01.04.2015
(73) Patentinhaber: Continental Reifen Deutschland GmbH, 30165 Hannover (DE)
(72) Erfinder: Herzog, Katharina, 31177 Harsum (DE); Recker, Carla, 30167 Hannover (DE); Pavon Sierra, Viktoria, 30419 Hannover (DE); Kramer, Thomas, 32049 Herford (DE); Torbrügge, Thorsten, 30855 Langenhagen (DE); Müller, Norbert, 29336 Nienhagen (DE)
(74) Vertreter: Finger, Karsten

(56) Entgegenhaltungen:
- EP-A1- 1 884 376
- EP-A1- 2 289 712
- EP-A1- 2 345 696
- EP-A1- 2 357 211
- EP-A1- 2 404 964
- EP-A2- 2 113 531
- WO-A1-2011/162771
- DE-A1-102007 060 859
- JP-A- H07 238 187
- US-A1- 2005 272 852
- US-A1- 2013 059 965

## Beschreibung

Die Erfindung betrifft eine schwefelvernetzbare Kautschukmischung, insbesondere für Fahrzeugreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.
Durch den teilweisen oder vollständigen Ersatz des Füllstoffes Ruß durch Kieselsäure in Kautschukmischungen wurden z.B. die Fahreigenschaften eines Reifens in den vergangenen Jahren insgesamt auf ein höheres Niveau gebracht. Die bekannten Zielkonflikte der sich gegensätzlich verhaltenden Reifeneigenschaften, bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich. Diese Eigenschaften sind auch bei technischen Gummiartikeln, wie Gurte, Riemen und Schläuche, ein wichtiges Qualitätskriterium.
Insbesondere bei Fahrzeugreifen wurden vielfältige Versuche unternommen, die Eigenschaften des Reifens durch die Variation der Polymerkomponenten, der Füllstoffe und der sonstigen Zuschlagstoffe vor allem in der Laufstreifenmischung positiv zu beeinflussen. Im Focus stehen hier vor allem die Eigenschaften Rollwiderstand und Abrieb. Dabei muss man berücksichtigen, dass eine Verbesserung in der einen Reifeneigenschaft oft eine Verschlechterung einer anderen Eigenschaft mit sich bringt. In einem gegebenen Mischungssystem existieren zum Beispiel verschiedene, bekannte Möglichkeiten den Rollwiderstand zu optimieren.
Zu erwähnen sind hier die Reduzierung des Füllgrades, der Wechsel des Polymersystems und die Senkung der Glasübergangstemperatur T_{g} der Kautschukmischung. Alle genannten Maßnahmen führen dabei zu einer Verschlechterung der Abriebeigenschaften und/oder Nassgriffeigenschaften und/oder Reißeigenschaften der gegebenen Mischung.

Unter dem Begriff Fahrzeugreifen werden in der vorliegenden Schrift Fahrzeugluftreifen, Vollgummireifen und Zweiradreifen verstanden.

Insbesondere die Beeinflussung der Glasübergangstemperatur der verwendeten Kautschukmischung durch die Wahl geeigneter Polymersysteme wird in der Fachwelt vielfach diskutiert.

Dabei ist bekannt, dass bei sonst gleichen Mischungsbestandteilen zweier Kautschukmischungen deren Glasübergangstemperatur durch die Glasübergangstemperatur des eingesetzten Polymers / der eingesetzten Polymere bestimmt wird. Je höher die Glasübergangstemperatur eines Polymers, desto höher ist auch die Glasübergangstemperatur der Kautschukmischung und desto schlechter ist das Rollwiderstandsverhalten der Kautschukmischung. Gute Indikatoren für das Rollwiderstandsverhalten von Kautschukmischungen sind die Rückprallelastizitäten bei 60 bis 70°C und die Werte für den Hystereseverlust, ausgedrückt durch den tan δ bei 60 bis 70°C.

Im Stand der Technik ist allgemein bekannt, dass 1,4-Polybutadien-Kautschuk eine sehr niedrige Glasübergangstemperatur von ca. -105°C aufweist, wodurch sich dieser Kautschuk für die Verbesserung des Rollwiderstandsverhaltens von Kautschukmischungen eignet. Allerdings ist ebenfalls bekannt, dass hierdurch das Nassgriffverhalten der Kautschukmischung erheblich verschlechtert wird.

Um Reifeneigenschaften wie Abrieb, Nassrutschverhalten und Rollwiderstand zu beeinflussen, ist es zudem bekannt, verschiedene Styrol-Butadien-Copolymere mit unterschiedlichen Styrol- und Vinyl-Gehalten und mit unterschiedlichen Modifizierungen für die Kautschukmischungen zu verwenden, wobei auch hier die beschriebene Problematik der Zielkonflikte auftritt.

Aus WO 2009007167 A1 ist zur Verbesserung des Nassgriffs bekannt, zwei verschiedene Polymere mit unterschiedlichen Glasübergangstemperaturen einzusetzen.
Ebenso zur Verbesserung des Nassgriffs werden in EP 065982 A1 20 bis 80 phr Dienkautschuk, hier konkret Naturkautschuk, und 80 bis 20 phr Styrol-Butadien-Copolymer mit einer Glasübergangstemperatur zwischen -50°C und -25°C verwendet. Der Einsatz von 10 bis 50 phr Dienkautschuk, hier Styrol-Butadien-Kautschuk, mit einer Glasübergangstemperatur kleiner als -45°C zur Verbesserung des Verhältnisses von Trocken- und Nassgriff wird in EP 1253170 A1 beschrieben. In US 6,812,822 B2 wiederum werden 5 bis 40 phr Styrol-Butadien-Copolymer mit einer Glasübergangstemperatur von -35°C oder höher und 95 bis 60 phr diolefinischer Kautschuk mit einer Glasübergangstemperatur von -20°C oder weniger zur Verbesserung der Dämpfungseigenschaften ("vibration-isolating properties") der Kautschukmischung eingesetzt.
Die DE 40 01 822 C2 beschreibt eine Kautschukmasse, umfassend 10 bis 100 Gewichtsteile eines lösungspolymerisierten Styrol-Butadien-Kautschuks mit einem Vinylgehalt von 20 bis 70 Gew.-% und einem Styrolgehalt von 54,5 bis 65 Gew.-% und 0 bis 90 Gewichtsteile eines emulsionspolymerisierten Styrol-Butadien-Kautschuks mit einem Glaspunkt von wenigstens -60°C und einem Styrolgehalt von 20 bis 65 Gew.-% und wenigstens 70 Gewichtsteile Ruß, die in diese Kautschukmasse eingemischt werden. Diese Kautschukmasse ist für den Einsatz für Laufflächen von Hochleistungsreifen mit einem großen Hystereseverlust, einem hohen Wärmewiderstand und einer bemerkenswerten Griffigkeit gedacht.
In DE 698 02 245 T2 wiederum wird ein Luftreifen mit einer schwefel-vulkanisierbaren Zusammensetzung beschrieben, die gekennzeichnet ist durch 50 bis 90 phr eines Kautschuks mit einer Glasübergangstemperatur im Bereich von -80°C bis -110°C und 10 bis 50 phr mindestens eines Kautschuks mit einer Glasübergangstemperatur im Bereich von -79°C bis +20°C und 15 bis 50 phr eines Harzes, das kein Kautschuk ist. Diese Mischung zeigt verbesserte Laboreigenschaften, welche mit einer verbesserten Reifenabnutzung bei gleichzeitiger Verbesserung der Griffigkeit und des Fahrverhaltens korrelieren.

Die Verbesserung des Griffverhaltens durch einen größeren Hystereseverlust, also größerer tan δ bei 0°C, geht jedoch bekanntermaßen mit einer Verschlechterung der Rollwiderstandseigenschaften, also der Dämpfung im Fahrbetrieb, einher, was z.B. in der DE 698 02 245 T2 aus der gleichzeitigen Erhöhung des tan δ bei 60°C in ESBR und BRhaltigen Kautschukmischungen ersichtlich wird.

Für die Optimierung des Rollwiderstandsverhaltens oder eine Optimierung diverser anderer für den Einsatz im Reifen relevanter Eigenschaften von Kautschukmischungen ohne eine Verschlechterung des Rollwiderstandsverhaltens ist bekannt, den eingesetzten Dienkautschuk derart zu funktionalisieren, dass eine Anbindung an den oder die Füllstoff(e) erfolgt.

So wird beispielsweise in der EP 2357211 A1 eine Kautschukmischung offenbart, die zumindest ein aliphatisches und/oder aromatisches Kohlenwasserstoffharz, zumindest einen Füllstoff und zumindest einen funktionalisierten Dienkautschuk enthält, dessen Funktionalisierung entlang der Polymerkette und/oder am Ende vorliegt und eine Anbindung an Füllstoffe ermöglicht. Als Funktionalisierungen werden Hydroxy-Gruppen in der Tabelle 1 für eine Anbindung der Polymere an Kieselsäure offenbart.
In der EP 2289990 A1 wird eine Kautschukmischung offenbart, die gleiche Mengen an Kieselsäure und Ruß sowie funktionalisierte Polymere enthält, wobei u.a. die Verwendung von 50 phr mit Siloxy- oder Siloxy-Aldimin-Gruppen funktionalisiertem Polybutadien anstelle von 50 phr eines unfunktionalisierten Polybutadiens offenbart wird. Eine solche Kautschukmischung zeigt verbesserte Rollwiderstandsindikatoren (Rebound 100°C) während sich die Nassgriffeigenschaften verschlechtern (Rebound 23°C). Der Einfluss auf die Reißeigenschaften, insbesondere die Weiterreißeigenschaften, wird in der EP 2289990 A1 nicht offenbart.
In der EP 1963110 B1 werden mit Silan-Sulfid modifizierte Polymere mit einer Glasübergangstemperatur von -23 bis -28 °C offenbart, welche in einer Kautschukmischung niedrige Werte für den Verlustfaktor tan delta (tan δ) bei 60 °C bei sonst gut ausbalancierten übrigen Eigenschaften erzielen.
In der EP 1535948 B1 wird ein Styrol-Butadien-Kautschuk offenbart, der als Funktionalisierung Polyorganosiloxan-Gruppen enthaltend Epoxy-Gruppen trägt, wobei drei oder mehr Polymerketten an eine Polyorganosiloxan-Gruppe geknüpft sind. Bei der Kombination dieses Polymers mit einem unfunktionalisierten Butadienkautschuk in einer kieselsäurehaltigen Kautschukmischung ergeben sich verbesserte Rollwiderstands-, Abrieb- und Nassgriffeigenschaften.

Der Erfindung liegt daher nun auf Basis des Standes der Technik die Aufgabe zu Grunde, eine Kautschukmischung, insbesondere für Fahrzeugreifen, Gurte, Riemen und Schläuche, bereitzustellen, die sich durch eine weitere Verbesserung im Rollwiderstandsverhalten und im Abriebverhalten auszeichnet, wobei die weiteren physikalischen Eigenschaften auf gleichem Niveau verbleiben bzw. insbesondere die Reißeigenschaften und/oder die Nassgriffeigenschaften ebenfalls weiter optimiert werden. Zudem soll die Kautschukmischung optional eine Verbesserung hinsichtlich der Wintereigenschaften und/oder des Handling-Verhaltens aufweisen.

Gelöst wird diese Aufgabe durch eine Kautschukmischung, die wenigstens die folgenden Bestandteile enthält:
- 5 bis 95 phr zumindest eines Styrol-Butadien-Kautschuks, der mit Phthalocyanin-Gruppen und/oder Hydroxy-Gruppen und/oder Epoxy-Gruppen und/oder Silan-Sulfid-Gruppen funktionalisiert ist und dessen Styrol-Gehalt 0 bis 12 Gew.-% beträgt und der im unvulkanisierten Zustand eine Glasübergangstemperatur (T_{g}) gemäß DSC von -75 bis -120°C aufweist, und
- 5 bis 95 phr zumindest eines weiteren Kautschuks und
- 20 bis 300 phr zumindest einer Kieselsäure.
Überraschenderweise wurde gefunden, dass die Kombination eines Styrol-Butadien-Kautschuks mit den oben genannten Merkmalen mit wenigstens einem weiteren Kautschuk und 20 bis 300 phr Kieselsäure in der erfindungsgemäßen Kautschukmischung sich durch eine Optimierung des Niveaus der physikalischen Eigenschaften, wie insbesondere das Rollwiderstandsverhalten und die Abriebeigenschaften, auszeichnet.
Gleichzeitig verbleiben die übrigen Reifeneigenschaften auf einem annähernd gleich hohen Niveau oder werden sogar verbessert, wobei insbesondere das Nassgriffverhalten und/oder die Reißeigenschaften und/oder das Trockenbremsverhalten und/oder die Wintereigenschaften und/oder das Handling-Verhalten der Kautschukmischung auf einem annähernd gleich hohen Niveau verbleiben oder sogar verbessert werden.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Wie bereits weiter oben ausgeführt, wurden bisher Kautschuke mit einer niedrigen Glasübergangstemperatur in einer Kautschukmischung in Kombination mit einem Kautschuk mit einer hohen T_{g} eingesetzt, um die Glasübergangstemperatur der Kautschukmischung zur Verbesserung insbesondere des Rollwiderstands gezielt einzustellen. Diese Kautschuke können aufgrund der vorliegenden Erfindung durch zumindest einen mit Phthalocyanin-Gruppen und/oder Hydroxy-Gruppen und/oder Epoxy-Gruppen und/oder Silan-Sulfid-Gruppen funktionalisierten Styrol-Butadien-Kautschuk mit einer Glasübergangstemperatur (Tg) im Bereich zwischen -120°C und -75°C ausgetauscht werden, wodurch sich überraschenderweise zusätzlich eine deutliche Verbesserung des Abriebverhaltens zeigt.
Da die Tg des mit Phthalocyanin-Gruppen und/oder Hydroxy-Gruppen und/oder Epoxy-Gruppen und/oder Silan-Sulfid-Gruppen funktionalisierten Styrol-Butadien-Kautschuks in der Regel unter dem der bisher verwendeten funktionalisierten Styrol-Butadien-Kautschuke liegt, kann gleichzeitig der Anteil an Styrol-Butadien-Kautschuken mit einer höheren T_{g} weiter erhöht werden, um dadurch die Vorteile des so genannten "Hoch-T_{g}-Styrol-Butadien-Kautschuks" weiter nutzbar zu machen.

Erfindungswesentlich ist daher, dass der in der Kautschukmischung verwendete funktionalisierte Styrol-Butadien-Kautschuk mit Phthalocyanin-Gruppen und/oder Hydroxy-Gruppen und/oder Epoxy-Gruppen und/oder Silan-Sulfid-Gruppen funktionalisiert ist.
Mit Phthalocyanin-Gruppen und/oder Hydroxy-Gruppen und/oder Epoxy-Gruppen und/oder Silan-Sulfid-Gruppen funktionalisiert bedeutet im Rahmen der vorliegenden Anmeldung, dass der Kautschuk entlang der Polymerkette mehrere dieser Gruppen und/oder am Kettenende jeweils einer Polymerkette wenigstens eine Phthalocyanin-Gruppe und/oder Hydroxy-Gruppe und/oder Epoxy-Gruppe und/oder Silan-Sulfid-Gruppe trägt. Hierbei ist es auch denkbar, dass nicht alle Polymerketten eine Phthalocyanin-Gruppe und/oder Hydroxy-Gruppe und/oder Epoxy-Gruppe und/oder Silan-Sulfid-Gruppe aufweisen. Der Gewichtsanteil von funktionalisierten Polymerketten beträgt dabei bevorzugt 30 bis 100 Gew.-%, besonders bevorzugt 50 bis 100 Gew.-% und ganz besonders bevorzugt 70 bis 100 Gew.-%. Bevorzugt sind die Polymerketten an deren Kettenende mit wenigstens einer Phthalocyanin-Gruppe und/oder Hydroxy-Gruppe und/oder Epoxy-Gruppe und/oder Silan-Sulfid-Gruppe funktionalisiert.

Der funktionalisierte Styrol-Butadien-Kautschuk wird bevorzugt durch anionische Polymerisation hergestellt. Hierbei reagieren die lebenden anionischen Polymerketten mit einem oder mehreren Modifikator-Verbindungen, wodurch die funktionelle(n) Gruppe(n) angebunden werden.

Gemäß einer bevorzugten Ausführungsform der Erfindung ist der funktionalisierte Styrol-Butadien-Kautschuk mit wenigstens einer Hydroxy-Gruppe und/oder wenigstens einer Silan-Sulfid-Gruppe funktionalisiert. Unter Silan-Sulfid-Gruppe wird im Rahmen der vorliegenden Erfindung ein organischer Rest bezeichnet, der wenigstens ein Schwefelatom und wenigstens eine substituierte Silyl-Gruppe -SiR₃ enthält.
Hierbei ist es erfindungswesentlich, dass die Silan-Sulfid-Gruppen ein oder mehrere Schwefelatom(e) enthalten.
In der erfindungsgemäßen Kautschukmischung wurde gefunden, dass mit einem funktionalisierten Styrol-Butadien-Kautschuk, der mit wenigstens einer Silan-Sulfid-Gruppe funktionalisiert ist, gegenüber einem funktionalisierten Styrol-Butadien-Kautschuk, der mit Siloxy,- Siloxan, Siloxy-Aldimin- oder Aminosiloxan-Gruppen, die jedoch schwefelfrei sind, also keine Schwefelatome enthalten, funktionalisiert ist, verbesserte physikalische Eigenschaften erzielt werden, wie insbesondere verbesserte Rollwiderstandsindikatoren und/oder ein verbessertes Abriebverhalten und/oder verbesserte Reißeigenschaften und/oder verbesserte Handling-Prediktoren, wie insbesondere eine erhöhte Steifigkeit, und/oder verbesserte Nassgriffeigenschaften.

Gemäß einer weiteren bevorzugten Ausführungsform der Erfindung ist der funktionalisierte Styrol-Butadien-Kautschuk durch Reaktion der lebenden Polymerketten bei der anionischen Polymerisation mit einem Silan-Sulfid-Modifikator gemäß Formel I) gebildet worden:

I) (R"O)ₓ(R)_{y}Si-R'-S-SiR₃

wobei die Reste R unabhängig voneinander C₁-C₁₆-Alkyl oder -Benzyl-Gruppen sind; und R" eine C₁-C₄-Alkylgruppe ist; und
R' ausgewählt ist aus C₆-C₁₈-Aryl, C₇-C₅₀-Alkylaryl, C₁-C₅₀-Alkyl und C₂-C₅₀-Dialkylether (d.h. -Alkyl-O-Alkyl-), wobei jede Gruppe optional mit einer oder mehreren Gruppen substituiert ist, welche ausgewählt ist/sind aus der Gruppe bestehend aus C₁-C₄-Alkyl, C₁-C₄-Alkoxy, C₆-C₁₂-Aryl, C₇-C₁₆-Alkylaryl, Di(C₁-C₇-Hydrocarbyl)amino, bis(tri(C₁-C₁₂-Alkyl)silyl)amino, tris(C₁-C₇-Hydrocarbyl)silyl und C₁-C₁₂-Thioalkyl; und
x eine ganze Zahl ausgewählt aus den Zahlen 1, 2 und 3 ist; und
y eine ganze Zahl ausgewählt aus den Zahlen 0, 1 und 2 ist; und x + y = 3 ist.

Es wird angenommen, dass die Reaktion der anionischen Polymerketten mit dem Silan-Sulfid-Modifikator gemäß Formel (I) ein modifiziertes Polymer gemäß Formel (II) ergibt:

(II) (D)_{z}(R"O)**ₓ**(R)_{y}Si-R'-S-SiR₃

wobei D ein elastisches Polymer ist; und
x eine ganze Zahl ausgewählt aus den Zahlen 0, 1 und 2 ist; und
y eine ganze Zahl ausgewählt aus den Zahlen 0, 1 und 2 ist; und
z eine ganze Zahl ausgewählt aus den Zahlen 1, 2 und 3 ist; und
x+y+z=3 ist;
und R, R" und R' gemäß Formel (I) definiert sind.

Ein derart funktionalisierter Styrol-Butadien-Kautschuk ist wie in Formel II) erkennbar mit Silan-Sulfid-Gruppen funktionalisiert.

Es wird ferner angenommen, dass das Polymer bei Kontakt mit Feuchtigkeit wenigstens teilweise ein modifiziertes Polymer gemäß Formel (III) ergibt:

(III) (D)_{z}(HO)ₓ,(R)_{y}Si-R'-S-SiR₃

wobei D ein elastisches Polymer ist; und
x eine ganze Zahl ausgewählt aus den Zahlen 0, 1 und 2 ist; und
y eine ganze Zahl ausgewählt aus den Zahlen 0, 1 und 2 ist; und
z eine ganze Zahl ausgewählt aus den Zahlen 1, 2 und 3 ist; und
x+y+z=3 ist;
und R und R' gemäß Formel (I) definiert sind.

Gemäß einer bevorzugten Ausführungsform der Erfindung ist in Formel (I) jedes R unabhängig voneinander ausgewählt aus C₁-C₅-Alkylgruppen und R' eine C₁-C₅-Alkylgruppe.

Gemäß einer weiteren bevorzugten Ausführungsform der Erfindung ist der funktionalisierte Styrol-Butadien-Kautschuk durch Reaktion der lebenden Polymerketten bei der anionischen Polymerisation mit wenigstens einem Silan-Sulfid-Modifikator gemäß der Formeln (1) und (2) sowie wenigstens einem Silan-Sulfid-Modifikator gemäß der Formeln (3), (4), (5) und (6) entstanden:

(1) (R¹O)₃Si-R⁴-S-SiR³₃

(2) (R¹³O)₃Si-R⁹-N(SiR¹⁰R¹¹R¹²)₂

(3) (R¹O)ₓ(R²)_{y}Si-R⁴-S-SiR³₃

(4) (R¹³O)ₚ(R¹⁴)_{q}Si-R⁹-N(SiR¹⁰R¹¹R¹²)₂

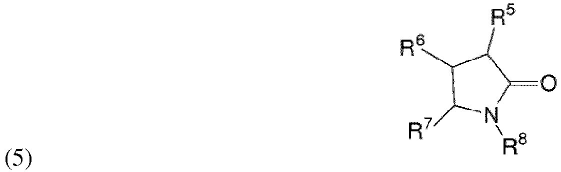

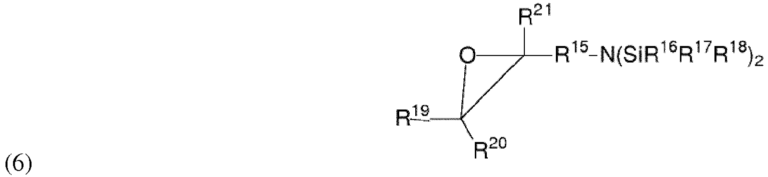

wobei R², R³, R¹⁰ R¹¹, R¹², R¹⁴ R¹⁶, R¹⁷ und R¹⁸ unabhängig voneinander ausgewählt sind aus C₁-C₁₆-Alkyl und -Benzyl-Gruppen, und wobei die Alkyl-Gruppen für die Reste R¹⁰ R¹¹ und R¹² und für R¹⁶, R¹⁷ und R¹⁸ in Form eines Ringes enthaltend zwei Siliziumatome und Stickstoff (N) aneinander gebunden sein können; und R¹ und R¹³ unabhängig voneinander ausgewählt sind aus C₁-C₄-Alkyl-Gruppen;
und
R⁴, R⁹ und R¹⁵ unabhängig voneinander ausgewählt sind aus C₆-C₁₈-Aryl, C₇-C₅₀-Alkylaryl, C₁-C₅₀-Alkyl und C₂-C₅₀-Dialkylether (d.h. -Alkyl-O-Alkyl-),
wobei jede Gruppe optional mit einer oder mehreren Gruppen substituiert ist, welche ausgewählt ist/sind aus der Gruppe bestehend aus C₁-C₄-Alkyl, C₁-C₄-Alkoxy, C₆-C₁₂-Aryl, C₇-C₁₆-Alkylaryl, Di(C₁-C₇-Hydrocarbyl)amino, bis(tri(C₁-C₁₂-Alkyl)silyl)amino, tris(C₁-C₇-Hydrocarbyl)silyl und C₁-C₁₂-Thioalkyl; und
R⁵, R⁶ und R⁷ unabhängig voneinander ausgewählt sind aus Wasserstoff (-H), C₁-C₁₆-Alkyl und C₆-C₁₂-Aryl; und
R⁸ ausgewählt ist aus C₁-C₁₆-Alkyl und C₆-C₁₂-Aryl; und
R¹⁹, R²⁰ und R²¹ unabhängig voneinander ausgewählt sind aus Wasserstoff und C₁-C₁₆-Alkyl; und
x und p jeweils eine ganze Zahl ausgewählt aus den Zahlen 1 und 2 sind; und
y und q jeweils eine ganze Zahl ausgewählt aus den Zahlen 1 und 2 sind; und x+y=3; und
p+q=3.

Gemäß einer besonders bevorzugten Ausführungsform der Erfindung ist der funktionalisierte Styrol-Butadien-Kautschuk durch Reaktion der lebenden Polymerketten bei der anionischen Polymerisation mit wenigstens einem Silan-Sulfid-Modifikator gemäß Formel IV) entstanden:

IV) (MeO)₂(Me)Si-(CH₂)₂-S-SiMe₂C(Me)₃

Die Verbindung gemäß Formel IV) ist ein Beispiel für den Silan-Sulfid-Modifikator gemäß Formel (3).

Mit einem derart modifizierten Styrol-Butadien-Kautschuk werden besonders hohe Verbesserungen hinsichtlich des Rollwiderstands- und/oder Abriebverhaltens der erfindungsgemäßen Kautschukmischung erzielt.

Gemäß einer weiteren besonders bevorzugten Ausführungsform der Erfindung ist der funktionalisierte Styrol-Butadien-Kautschuk durch Reaktion der lebenden Polymerketten bei der anionischen Polymerisation mit einem Silan-Sulfid-Modifikator gemäß Formel IV) und Formel V) entstanden:

IV) (MeO)₂(Me)Si-(CH₂)₂-S-SiMe₂C(Me)₃

V) (MeO)₃Si-(CH₂)₂-S-SiMe₂C(Me)₃

Die Verbindung gemäß Formel V) ist ein Beispiel für den Silan-Sulfid-Modifikator gemäß Formel (1).

Mit einem derart modifizierten Styrol-Butadien-Kautschuk werden besonders hohe Verbesserungen hinsichtlich des Rollwiderstands- und/oder Abriebverhaltens der erfindungsgemäßen Kautschukmischung erzielt.
Der genannte lösungspolymerisierte Styrol-Butadien-Kautschuk weist im unvulkanisierten Zustand eine Glasübergangstemperatur von -75°C bis -120°C (minus 75 bis minus 120 °C), bevorzugt -75 bis -110°C, besonders bevorzugt -80 bis -110°C, ganz besonders bevorzugt -80°C bis -100°C, auf und kann somit als Styrol-Butadien-Kautschuk mit einer vergleichsweise niedrigen Glasübergangstemperatur angesehen werden. Damit ersetzt dieser Styrol-Butadien-Kautschuk in der erfindungsgemäßen Kautschukmischung im Stand der Technik bekannte Dienkautschuke mit einer niedrigen Glasübergangstemperatur, insbesondere Butadienkautschuk (=BR, Polybutadien), bei einer gleichzeitigen Verbesserung des Rollwiderstandsverhaltens.
Weiterhin ist es erfindungswesentlich, dass der in der Kautschukmischung verwendete funktionalisierte Styrol-Butadien-Kautschuk einen Styrol-Gehalt von 0 bis 12 Gew.-% aufweist. Dies bedeutet, dass bei 0 Gew.-% Styrol ein Butadien-Kautschuk vorliegt.

Gemäß einer bevorzugten Ausführungsform der Erfindung beträgt der Styrol-Gehalt des Styrol-Butadien-Kautschuks 0 bis 2 Gew.-%, besonders bevorzugt 0 Gew.-%.

Gemäß einer weiteren bevorzugten Ausführungsform der Erfindung beträgt der Styrol-Gehalt des Styrol-Butadien-Kautschuks 0,1 bis 12 Gew.-%, besonders bevorzugt 5 bis 12 Gew.-%, ganz besonders bevorzugt 9 bis 11 Gew.-%.

Der lösungspolymerisierte Styrol-Butadien-Kautschuk weist bevorzugt einen Vinyl-Gehalt bezogen auf den Butadien-Anteil von 1 bis 30 Gew.-%, bevorzugt 1 bis 15 Gew.-%, besonders bevorzugt 5 bis 12 Gew.-% und ganz besonders bevorzugt 7 bis 12 Gew.-%, wiederum ganz besonders bevorzugt von 7 bis 11 Gew.-%. auf. Hierdurch wird eine niedrige Glasübergangstemperatur des Polymers erzielt.

Die Bestimmung des Styrol-Gehaltes und des Vinyl-Gehalts des Butadien-Anteils der im Rahmen der vorliegenden Erfindung diskutierten Polymere erfolgt mittels ¹³C-NMR (Lösungsmittel Deuterochloroform CDCl₃; NMR: engl. "nuclear magnetic resonance") und Abgleich mit Daten aus der Infrarot-Spektrometrie (IR; FT-IR Spektrometer der Firma Nicolet, KBr-Fenster 25 mm Durchmesser x 5 mm, 80 mg Probe in 5 mL 1,2-Dichlorbenzol). Die Bestimmung der Glasübergangstemperatur (Tg) der Polymere (insbesondere der funktionalisierten Styrol-Butadien-Kautschuke) erfolgt anhand von Dynamischer Differenz-Kalorimetrie (engl. Dynamic Scanning Calorimetry, DSC gemäß DIN 53765: 1994-03 bzw. ISO 11357-2: 1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf Temperaturen niedriger als -120 °C mit 10°C/min).

Der obige funktionalisierte Styrol-Butadien-Kautschuk weist bevorzugt eine Mooney-Viskosität (ML 1 +4, 100°C gemäß ASTM D 1646 (2004)) von 20 bis 200 Mooney-Einheiten (MU = mooney units), besonders bevorzugt 25 bis 150, ganz besonders bevorzugt 25 bis 100, auf.

Die bevorzugte Molekulargewichtsverteilung des funktionalisierten Styrol-Butadien-Kautschuks, Mw/Mn, liegt zwischen 1,2 und 3,0.
Wenn Mw/Mn kleiner als 1,2 ist, ergibt sich eine schlechte Prozessierbarkeit des Polymers und der erfindungsgemäßen Kautschukmischung sowie eine schlechte Verteilung der Bestandteile, insbesondere eine schlechte Füllstoffdispersion der Kautschukmischung. Wenn Mw/Mn größer als 3,0 ist, ist der Anteil an Komponenten mit einem niedrigen Molekulargewicht zu hoch, was in einer erhöhten Hysterese und damit einem schlechten Rollwiderstandsverhalten der Kautschukmischung resultiert.

Der obige funktionalisierte Styrol-Butadien-Kautschuk wird in der erfindungsgemäßen Kautschukmischung in Mengen von 5 bis 95 phr, bevorzugt 20 bis 95 phr, besonders bevorzugt 40 bis 95, besonders bevorzugt 60 bis 95 phr, wiederum ganz besonders bevorzugt in Mengen von 70 bis 90 phr verwendet.

Der eingesetzte mit Phthalocyanin-Gruppen und/oder Hydroxy-Gruppen und/oder Epoxy-Gruppen und/oder Silan-Sulfid-Gruppen funktionalisierte Styrol-Butadien-Kautschuk hat in einer bevorzugten Ausführungsform einen Styrol-Gehalt von 0 Gew und einen Vinylgehalt von 1 bis 15 Gew.-%, besonders bevorzugt 7 bis 12 Gew. -%.

Der eingesetzte mit Phthalocyanin-Gruppen und/oder Hydroxy-Gruppen und/oder Epoxy-Gruppen und/oder Silan-Sulfid-Gruppen funktionalisierte Styrol-Butadien-Kautschuk kann lösungspolymerisiert oder emulsionspolymerisieit sein. Bevorzugt handelt es sich um lösungspolymerisiertes Styrol-Butadien-Kautschuk S(S)BR mit einem Styrol-Gehalt von 0 bis 12 Gew.-%.

Die erfindungsgemäße Kautschukmischung enthält zudem 5 bis 95 phr, bevorzugt 5 bis 80 phr, besonders bevorzugt 5 bis 60 phr, ganz besonders bevorzugt 5 bis 40 phr, wiederum ganz besonders bevorzugt 10 bis 30 phr wenigstens eines weiteren Kautschuks.

Der wenigstens eine weitere Kautschuk ist dabei ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk und/oder Flüssigkautschuken mit einem Molekulargewicht Mw von größer als 20000 g/mol und/oder Halobutylkautschuk und/oder Polynorbornen und/oder Isopren-Isobutylen-Copolymer und/oder Ethylen-Propylen-Dien-Kautschuk und/oder Nitrilkautschuk und/oder Chloroprenkautschuk und/oder Acrylat-Kautschuk und/oder Fluorkautschuk und/oder Silikon-Kautschuk und/oder Polysulfidkautschuk und/oder Epichlorhydrinkautschuk und/oder Styrol-Isopren-Butadien-Teipolymer und/oder hydrierter Acrylnitrilbutadienkautschuk und/oder Isopren-Butadien-Copolymer und/oder hydrierter Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-DienKautschuk kommen bei der Herstellung von technischen Gummiartikeln, wie Gurte, Riemen und Schläuche, zum Einsatz.

Bevorzugt handelt es sich bei dem weiteren Kautschuk um wenigstens einen Dienkautschuk, der ausgewählt ist aus der Gruppe bestehend aus synthetischem Polyisopren und natürlichem Polyisopren (NR) und Styrol-Butadien-Kautschuk und Polybutadien (BR).
Dabei kann es sich bei dem natürlichen Polyisopren und dem synthetischen Polyisopren um alle dem Fachmann bekannten Typen handeln.
Bevorzugt handelt es sich bei dem weiteren Dienkautschuk wenigstens um natürliches Polyisopren. Hiermit wird eine besonders gute Verarbeitbarkeit (Extrudierbarkeit, Mischbarkeit, etc.) der erfindungsgemäßen Kautschukmischung erzielt. Der Styrol-Butadien-Kautschuk aus der Gruppe der weiteren Dienkautschuke ist im Rahmen der vorliegenden Anmeldung ein im Stand der Technik bekannter Styrol-Butadien-Kautschuk und kann daher im Verschnitt mit dem erfindungswesentlich vorhandenen lösungspolymerisierten Styrol-Butadien-Kautschuk (SSBR), der mit Phthalocyanin-Gruppen und/oder Hydroxy-Gruppen und/oder Epoxy-Gruppen und/oder Silan-Sulfid-Gruppen funktionalisiert ist und dessen Styrol-Gehalt 0 bis 12 Gew.-% beträgt und der im unvulkanisierten Zustand eine Glasübergangstemperatur T_{g} gemäß DSC von -75 bis -120 °C aufweist, eingesetzt werden.

Gemäß einer weiteren bevorzugten Weiterbildung der Erfindung enthält die Kautschukmischung 5 bis 95 phr wenigstens eines natürlichen Polyisoprens und/oder 5 bis 95 phr wenigstens eines synthetischen Polyisoprens, bevorzugt 5 bis 20 phr wenigstens eines natürlichen Polyisoprens und/oder 5 bis 20 phr wenigstens eines synthetischen Polyisoprens.

Gemäß einer bevorzugten Ausführungsform der Erfindung enthält die Kautschukmischung 5 bis 15 phr wenigstens eines natürlichen und/oder synthetischen Polyisoprens in Kombination mit 85 bis 95 phr des wie oben beschrieben funktionalisierten Styrol-Butadien-Kautschuks mit einer T_{g} von -100 bis -87°C, wobei dieser in dieser Ausführungsform besonders bevorzugt einen Styrol-Gehalt von 0 bis 2 Gew.-%, ganz besonders bevorzugt von 0 Gew.-%, aufweist. Eine derartige Kautschukmischung zeigt im Vergleich zu einer Kautschukmischung, die die gleiche Menge an Butadien-Kautschuk mit einer T_{g} von -105°C aus dem Stand der Technik enthält, verbesserte Abriebeigenschaften und ein verbessertes Rollwiderstandsverhalten, wobei die übrigen Reifeneigenschaften nicht signifikant verschlechtert werden und/oder gleich bleiben. Insbesondere bleiben Nassgriff-Verhalten und die Reißeigenschaften auf einem für die Anwendung in Laufstreifen von Fahrzeugreifen akzeptablen Niveau.

Gemäß einer weiteren bevorzugten Ausführungsform der Erfindung enthält die Kautschukmischung 45 bis 55 phr zumindest eines Rußes, bevorzugt ein Ruß des Typs N339, 40 bis 50 phr Kieselsäure sowie 5 bis 15 phr wenigstens eines natürlichen und/oder synthetischen Polyisoprens in Kombination mit 85 bis 95 phr des wie oben beschrieben funktionalisierten Styrol-Butadien-Kautschuks mit einer Tg von -100 bis -87 °C, wobei dieser in dieser Ausführungsform besonders bevorzugt einen Styrol-Gehalt von 0 bis 2 Gew.-%, ganz besonders bevorzugt von 0 Gew.-%, aufweist. Eine derartige Kautschukmischung zeigt im Vergleich zu einer Kautschukmischung, die die gleiche Menge an Butadien-Kautschuk mit einer Tg von -105 °C aus dem Stand der Technik enthält, verbesserte Abriebeigenschaften, verbessertes Rollwiderstandsverhalten und eine gleiche und/oder erhöhte Steifigkeit als Indikator für gleichbleibendes und/oder verbessertes Handling-Verhalten wobei die übrigen Reifeneigenschaften nicht signifikant verschlechtert werden und/oder gleich bleiben. Insbesondere bleiben Nassgriff-Verhalten und die Reißeigenschaften auf einem für die Anwendung in Laufstreifen von Fahrzeugreifen akzeptablen Niveau.

Gemäß einer weiteren bevorzugten Ausführungsform der Erfindung enthält die Kautschukmischung 30 bis 45 phr wenigstens eines natürlichen Polyisoprens und/oder 55 bis 70 phr wenigstens eines synthetischen Polyisoprens, wobei natürliches Polyisopren besonders bevorzugt ist, in Kombination mit 55 bis 70 phr des wie oben beschrieben funktionalisierten Styrol-Butadien-Kautschuks mit einer Tg von -100 bis 87 °C, wobei dieser in dieser Ausführungsform besonders bevorzugt einen Styrol-Gehalt von 0 bis 2 Gew.-%, ganz besonders bevorzugt von 0 Gew.-%, aufweist. In dieser Ausführungsform der Erfindung weist die Kautschukmischung im Vergleich zum Stand der Technik verbesserte Rollwiderstands- und Nassbrems- und Abriebs- und TrockenbremsEigenschaften auf. Bevorzugt werden in dieser Ausführungsform der Erfindung 5 bis 10 phr eines Rußes, bevorzugt des Typs N121, in Kombination mit 70 bis 80 phr einer Kieselsäure eingesetzt. Weiterhin ist es bevorzugt, wenn kein weiterer Kautschuk in dieser Ausführungsform der Erfindung enthalten ist.

Gemäß einer bevorzugten Weiterbildung der Erfindung enthält die Kautschukmischung 30 bis 50 phr des wie oben beschrieben funktionalisierten Styrol-Butadien-Kautschuks mit einer T_{g} von -100 bis -87 °C, wobei dieser in dieser Ausführungsform besonders bevorzugt einen Styrol-Gehalt von 0 bis 2 Gew.-%, ganz besonders bevorzugt von 0 Gew.-%, aufweist, und 5 bis 10 phr natürliches Polyisopren und 40 bis 60 phr wenigstens eines weiteren Styrol-Butadien-Kautschuks. Eine derartige Kautschukmischung weist besonders vorteilhafte Abrieb- und Nassgriff-Eigenschaften auf, ohne Nachteile hinsichtlich des Rollwiderstandes zu zeigen.

In einer weiteren bevorzugten Ausführungsform der Erfindung enthält die Kautschukmischung 5 bis 95 phr, besonders bevorzugt 5 bis 65 phr und ganz besonders bevorzugt 10 bis 55 phr, zumindest eines lösungspolymerisierten Styrol-Butadien-Kautschuks, der mit Phthalocyanin-Gruppen und/oder Hydroxy-Gruppen und/oder Epoxy-Gruppen und/oder Silan-Sulfid-Gruppen funktionalisiert ist und dessen Styrol-Gehalt 0 bis 12 Gew.-% beträgt und der im unvulkanisierten Zustand eine Glasübergangstemperatur Tg gemäß DSC von -75 bis -120 °C aufweist, und 5 bis 70 phr, besonders bevorzugt 35 bis 70 phr und ganz besonders bevorzugt 45 bis 55 phr, wenigstens eines weiteren Dienkautschuks. Besonders bevorzugt handelt es sich in dieser weiteren bevorzugten Ausführungsform der Erfindung bei dem wenigstens einen weiteren Dienkautschuk um zwei verschiedene Dienkautschuke. Besonders bevorzugt sind die zwei verschiedenen Dienkautschuke Styrol-Butadien-Kautschuk und natürliches Polyisopren.

Mit einer derartigen Zusammensetzung des Polymersystems ist es möglich, eine im Vergleich zum Stand der Technik gleiche Glasübergangstemperatur T_{g} der Kautschukmischung einzustellen bei verbesserten Rollwiderstandsindikatoren und verbessertem Abriebverhalten ohne eine Verschlechterung der sonstigen Reifeneigenschaften der Kautschukmischung im Vergleich zum Stand der Technik in Kauf nehmen zu müssen.

Gemäß einer weiteren bevorzugten Ausführungsform der Erfindung enthält die Kautschukmischung 5 bis 15 phr wenigstens eines natürlichen und/oder synthetischen Polyisoprens in Kombination mit 85 bis 95 phr des wie oben beschrieben mit Silan-Sulfid-Gruppen funktionalisierten Styrol-Butadien-Kautschuks mit einer T_{g}
von -87 bis -80 °C, wobei dieser in dieser Ausführungsform besonders bevorzugt einen Styrol-Gehalt von 9 bis 11 Gew.-%, ganz besonders bevorzugt von 10 Gew.-% aufweist. Eine derartige Kautschukmischung zeigt im Vergleich zu einer Kautschukmischung, die die gleiche Menge an Butadien-Kautschuk mit einer Tg von -105 °C aus dem Stand der Technik enthält, ein verbessertes Rollwiderstandsverhalten, wobei die übrigen Reifeneigenschaften nicht signifikant verschlechtert werden und/oder gleich bleiben. Insbesondere bleiben Nassgriff-Verhalten und die Reißeigenschaften auf einem für die Anwendung in Laufstreifen von Fahrzeugreifen akzeptablen Niveau.

Gemäß einer weiteren bevorzugten Ausführungsform der Erfindung enthält die Kautschukmischung 15 bis 25 phr wenigstens eines natürlichen und/oder synthetischen Polyisoprens in Kombination mit 24 bis 34 phr eines lösungspolymerisierten Styrol-Butadien-Kautschuks aus dem Stand der Technik mit einer Glasübergangstemperatur von -40 bis +10 °C (minus 40 bis plus 10 °C), bevorzugt -30 bis -20 °C (minus 30 bis minus 20), (Hoch-Tg-SSBR) sowie 46 bis 56 phr des wie oben beschrieben mit Silan-Sulfid-Gruppen funktionalisierten Styrol-Butadien-Kautschuks mit einer Tg von -87 bis -80 °C, wobei dieser in dieser Ausführungsform besonders bevorzugt einen Styrol-Gehalt von 9 bis 11 Gew.-%, ganz besonders bevorzugt von 10 Gew.-% aufweist.
Eine derartige Kautschukmischung ersetzt eine Kautschukmischung aus dem Stand der Technik mit der gleichen Glasübergangstemperatur, wobei im Vergleich zum Stand der Technik durch die Verwendung des beschriebenen funktionalisierten Styrol-Butadien-Kautschuks mit einer T_{g} von -87 bis -80 °C gleichzeitig die Menge des Hoch-Tg-SSBRs erhöht werden kann, was zu einer gleichzeitigen Verbesserung des Rollwiderstandsverhaltens und der Abriebeigenschaften führt, wobei die übrigen Reifeneigenschaften auf nahezu gleichem Niveau verbleiben.

Gemäß einer weiteren bevorzugten Ausführungsform der Erfindung enthält die Kautschukmischung 10 bis 70 phr eines lösungspolymerisierten Styrol-Butadien-Kautschuks aus dem Stand der Technik mit einer Glasübergangstemperatur von -40 bis +10 °C (Hoch-Tg-SSBR) sowie 10 bis 70 phr des mit Phthalocyanin-Gruppen und/oder Hydroxy-Gruppen und/oder Epoxy-Gruppen und/oder Silan-Sulfid-Gruppen, besonders bevorzugt wie oben beschrieben mit Silan-Sulfid-Gruppen, funktionalisierten Styrol-Butadien-Kautschuks mit einer Tg von -120 bis -75, bevorzugt von -110 bis -75, besonders bevorzugt von -110 bis -80 °C, ganz besonders bevorzugt von -87 bis -80 °C, wobei dieser in dieser Ausführungsform bevorzugt einen Styrol-Gehalt von 1 bis 12 Gew.-%, besonders bevorzugt 9 bis 11 Gew.-%, ganz besonders bevorzugt von 10 bis 11 Gew.-% aufweist. Die Kautschukmischung kann weiterhin wenigstens einen weiteren Dienkautschuk, insbesondere natürliches und/oder synthetisches Polyisopren enthalten.
Eine derartige Kautschukmischung ersetzt eine Kautschukmischung aus dem Stand der Technik mit der gleichen Glasübergangstemperatur, wobei im Vergleich zum Stand der Technik durch die Verwendung des beschriebenen funktionalisierten Styrol-Butadien-Kautschuks mit einer Tg von -120 bis -75 °C, bevorzugt von -110 bis -75 °C, besonders bevorzugt von -110 bis -80 °C, ganz besonders bevorzugt von -87 bis -80 °C gleichzeitig die Menge des Hoch-Tg-SSBRs erhöht werden kann, was zu einer gleichzeitigen Verbesserung des Rollwiderstandsverhaltens und der Abriebeigenschaften führt, wobei die übrigen Reifeneigenschaften auf nahezu gleichem Niveau verbleiben.

Die erfindungsgemäße Kautschukmischung enthält 20 bis 300 phr, bevorzugt 20 bis 150 phr, besonders bevorzugt 40 bis 150 phr und ganz besonders bevorzugt 80 bis 110 phr wenigstens einer Kieselsäure.
Die erfindungsgemäße Kautschukmischung kann neben Kieselsäure noch weitere bekannte polare und/oder unpolare Füllstoffe, wie z.B. Ruß, enthalten.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 100 bis 260 m²/g und ganz besonders bevorzugt von 130 bis 235 m²/g, und eine CTAB-Oberfläche (gemäß ASTM D 3765) von 30 bis 400 m²/g, bevorzugt von 30 bis 250 m²/g, besonders bevorzugt von 100 bis 250 m²/g und ganz besonders bevorzugt von 125 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Bevorzugt wird ein Kupplungsagens, in Form von Silan oder einer siliziumorganischen Verbindung, verwendet. Hierbei können ein oder mehrere verschiedene Silan-Kupplungsagenzien in Kombination miteinander eingesetzt werden. Die Kautschukmischung kann somit ein Gemisch verschiedener Silane enthalten.
Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:

-SCN, -SH, -NH₂ oder -Sₓ- (mit x = 2 bis 8).

So können als Silan-Kupplungsagenzien z. B. 3-Mercaptopropyltriethoxysilan, 3-Thiocyanato-propyltrimethoxysilan oder 3,3`-Bis(triethoxysilylpropyl)polysulfide mit 2 bis 8 Schwefelatomen, wie z. B. 3,3`-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.
Die Menge des Kupplungsagens beträgt bevorzugt 0,1 bis 20 phr, besonders bevorzugt 1 bis 15 phr.

Gemäß einer bevorzugten Ausführungsform der Erfindung enthält die Kautschukmischung 80 bis 110 phr Kieselsäure. Hierdurch ergeben sich besonders gute Abriebeigenschaften bei gleichzeitig guten Reißeigenschaften und verbesserten Trockenbremseigenschaften. In dieser bevorzugten Ausführungsform sind zusätzlich bevorzugt 2 bis 15, besonders bevorzugt 2 bis 10 phr, Ruß in der Kautschukmischung enthalten.

Gemäß einer besonders vorteilhaften Ausführungsform der Erfindung enthält die Kautschukmischung 40 bis 60 phr wenigstens eines Rußes. Hierdurch ergibt sich eine besonders hohe Verbesserung der Abriebeigenschaften im Vergleich zum Stand der Technik, während gleichzeitig die Steifigkeit erhöht wird, sodass das Handling-Verhalten zusätzlich verbessert wird. Gleichzeitig zeigt diese Kautschukmischung eine besonders hohe Verbesserung der Rollwiderstandseigenschaften. Somit ist mit dieser Ausführungsform der Erfindung der Zielkonflikt aus den Eigenschaften Rollwiderstand, Abrieb und Handling im Vergleich zum Stand der Technik stärker entkoppelt.

Als Ruße kommen alle der fachkundigen Person bekannten Rußtypen in Frage.
In einer Ausführungsform hat der Ruß eine Jodzahl, gemäß ASTM D 1510, die auch als Jodadsorptionszahl bezeichnet wird, zwischen 30 g/kg und 250 g/kg, bevorzugt 30 bis 180 g/kg, besonders bevorzugt 40 bis 180 g/kg, und ganz besonders bevorzugt 40 bis 130 kg/g, und eine DBP-Zahl gemäß ASTM D 2414 von 80 bis 200 ml/100 g, bevorzugt 100 bis 200 ml/100g, besonders bevorzugt 115 bis 200 ml/100g.

Die DBP-Zahl gemäß ASTM D 2414 bestimmt das spezifische Absorptionsvolumen eines Rußes oder eines hellen Füllstoffes mittels Dibutylphthalat.
Die Verwendung eines solchen Rußtyps in der Kautschukmischung, insbesondere für Fahrzeugreifen, gewährleistet einen bestmöglichen Kompromiss aus Abrieb widerstand und Wärmeaufbau, der wiederum den ökologisch relevanten Rollwiderstand beeinflusst. Bevorzugt ist hierbei, wenn lediglich ein Rußtyp in der jeweiligen Kautschukmischung verwendet wird, es können aber auch verschiedene Rußtypen in die Kautschukmischung eingemischt werden.

Weiterhin ist es denkbar, dass die Kautschukmischung Kohlenstoffnanoröhrchen (carbon nanotubes (CNT) inklusive diskreter CNTs, sogenannten hollow carbon fibers (HCF) und modifizierter CNT enthaltend eine oder mehrere funktionelle Gruppen, wie Hydroxy-, Carboxy und Carbonyl-Gruppen) enthält.
Auch Graphit und Graphene sowie sogenannte "carbon-silica dual-phase filler" sind als Füllstoff denkbar.
Die Kautschukmischung kann außerdem noch andere polare Füllstoffe, wie beispielsweise Alumosilicate, Kreide, Stärke, Magnesiumoxid, Titandioxid oder Kautschukgele enthalten.

Es können in der Kautschukmischung noch 0 bis 70 phr, bevorzugt 0,1 bis 60 phr, bevorzugt 0,1 bis 50 phr, zumindest eines Weichmachers vorhanden sein.
Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure),
c) Wachse,
d) Harze, insbesondere Klebharze,
e) Mastikationshilfsmittel, wie z. B. 2,2'-Dibenzamidodiphenyldisulfid (DBD) und
f) Verarbeitungshilfsmittel, wie z.B. Fettsäuresalze, wie z.B. Zinkseifen, und Fettsäureester und deren Derivate.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation wird in Anwesenheit von Schwefel oder Schwefelspendern mit Hilfe von Vulkanisationsbeschleunigern durchgeführt, wobei einige
Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049261 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

A) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.

Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe). Hiermit werden sehr gute Abrieb- und Reißeigenschaften der erfindungsgemäßen Kautschukmischung erzielt.

Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049261 A2 beschrieben, wie z.B. ein Vulkanisationsmittel der Formel A), sowie die oben genannten Systeme Vulkuren®, Duralink® und Perkalink® begrifflich als Vulkanisationsmittel zusammengefasst.
Die erfindungsgemäße Kautschukmischung enthält bevorzugt wenigstens ein Vulkanisationsmittel ausgewählt aus der Gruppe enthaltend Schwefel und/oder Schwefelspender und/oder Vulkanisationsbeschleuniger und/oder Vulkanisationsmittel, die mit einer Funktionalität größer vier vernetzen. Hierdurch lassen sich aus der erfindungsgemäßen Kautschukmischung Vulkanisate, insbesondere für die Anwendung im Fahrzeugreifen, herstellen.

Die erfindungsgemäße Kautschukmischung enthält bevorzugt wenigstens ein Vulkanisationsmittel ausgewählt aus der Gruppe bestehend aus Schwefel und/oder Schwefelspender und/oder Vulkanisationsbeschleuniger und/oder Vulkanisationsmittel, die mit einer Funktionalität größer vier vernetzen. Hierdurch lassen sich aus der erfindungsgemäßen Kautschukmischung Vulkanisate, insbesondere für die Anwendung im Fahrzeugreifen, herstellen.

Außerdem können in der Kautschukmischung Vulkanisationsverzögerer vorhanden sein.

Gemäß einer vorteilhaften Weiterbildung der Erfindung werden mehrere Beschleuniger eingesetzt. Bevorzugt wird ein Sulfenamidbeschleuniger, besonders bevorzugt CBS, in Kombination mit dem Guanidin-Beschleuniger DPG (Diphenylguanidin) eingesetzt. Die Menge an DPG beträgt dabei 0 bis 5 phr, bevorzugt 0,1 bis 3 phr, besonders bevorzugt 0,5 bis 2,5 phr, ganz besonders bevorzugt 1 bis 2,5 phr.

Eine weitere Aufgabe der vorliegenden Erfindung besteht darin, einen Fahrzeugreifen bereitzustellen, der sich durch ein verbessertes Rollwiderstandsverhalten und ein verbessertes Abriebverhalten auszeichnet. Gelöst wird diese Aufgabe dadurch, dass der Fahrzeugreifen in wenigstens einem Bauteil die erfindungsgemäße Kautschukmischung wie oben beschrieben enthält. Dabei gelten alle oben genannten Ausführungen zu den Bestandteilen und deren Merkmale.
Bevorzugt handelt es sich bei dem Bauteil um einen Laufstreifen. Wie dem Fachmann bekannt ist, trägt der Laufstreifen zu einem relativ hohen Anteil zum Gesamtrollwiderstand und maßgeblich zu dem Abrieb des Reifens bei.

Der Erfindung liegt weiterhin die Aufgabe zu Grunde, das Abriebverhalten von Fahrzeugreifen und technischen Gummiartikeln, wie bspw. Riemen, Gurte und Schläuche, zu optimieren, ohne dass andere für den jeweiligen Einsatz relevante Eigenschaften signifikant negativ beeinträchtigt werden.
Gelöst wird diese Aufgabe durch die Verwendung der obig beschriebenen Kautschukmischung, zur Herstellung von Fahrzeugreifen, insbesondere zur Herstellung des Laufstreifens eines Reifens und/oder einer Body-Mischung eines Reifens und zur Herstellung von technischen Gummiartikeln, wie bspw. Riemen, Gurte und Schläuche, zu verwenden.
Als Body-Mischung werden hierbei die Kautschukmischungen für die inneren Bauteile eines Reifen bezeichnet. Als innere Reifenbauteile werden im Wesentlichen Squeegee, Seitenwand, Innenseele (Innenschicht), Kernprofil, Gürtel, Schulter, Gürtelprofil, Karkasse, Wulstverstärker, Wulstprofil, Hornprofil und Bandage bezeichnet.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.
Zur Verwendung in Fahrzeugreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Zur Verwendung der erfindungsgemäßen Kautschukmischung in Schläuchen wird häufig keine so genannte Schwefelvernetzung, sondern eine peroxidische Vernetzung bevorzugt. Die Herstellung der Schläuche erfolgt analog dem im Handbuch der Kautschuktechnologie, Dr. Gupta Verlag, 2001, Kapitel 13.4 beschriebenen Verfahren.

Die Erfindung soll nun anhand von Vergleichs- und Ausführungsbeispielen, die in Tabellen 1 bis 3 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt. Bei sämtlichen in der Tabelle enthaltenen Mischungsbeispielen sind die angegebenen Mengenangaben Gewichtsteile, die auf 100 Gewichtsteile Gesamtkautschuk bezogen sind (phr) oder auf 100 Gewichtsteile Kieselsäure bezogen sind (phf).

Die Mischungsherstellung erfolgte unter üblichen Bedingungen in drei Stufen in einem Labortangentialmischer. Aus sämtlichen Mischungen wurden Prüfkörper durch optimale Vulkanisation unter Druck bei 160°C hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte (Einheit Shore A, abgekürzt ShA) bei Raumtemperatur (RT) gemäß DIN 53 505
- Rückprallelastizität (abgekürzt Rückprall) bei Raumtemperatur (RT) und 70°C gemäß DIN 53 512
- Spannungswerte bei 50, 100 und 300 % Dehnung (Modul 50, Modul 100 bzw. Modul 300) bei Raumtemperatur (RT) gemäß DIN 53 504
- Zugfestigkeit und Bruchdehnung bei Raumtemperatur gemäß DIN 53 504
- Abrieb bei Raumtemperatur gemäß DIN53 516 bzw. DIN/ISO 4649
- Glasübergangstemperatur T_{g} der Kautschukmischung aus Verlustfaktor tan δ (tangens delta) aus dynamisch-mechanischer Messung gemäß DIN 53 513 (Temperaturdurchlauf, "temperature sweep")

Die Bestimmung des Molekulargewichtes (Gewichtsmittel Mw und Zahlenmittel Mn) der Polymere erfolgt mittels Gelpermeationschromatographie (GPC mit Tetrahydrofuran (THF) als Elutionsmittel bei 40°C, kalibriert mit Polystyrol-Standard EasiCal PS-1; Größenausschlußchromatographie; engl. SEC = size exclusion chromatography).
Die Bestimmung der Mooney-Viskositäten (ML 1+4, 100°C) der eingesetzten Polymere erfolgt gemäß ASTM D 1646 (2004).

**Tabelle 1**

| **Bestandteile** | **Einheit** | **V1** | **E1** | **E2** | **E3** |
|---|---|---|---|---|---|
| NR TSR | phr | 10 | 10 | 10 | 10 |
| BR^{a)} | phr | 90 | - | - | - |
| SSBR^{b)} | phr | - | 90 | - | - |
| SSBR^{c)} | phr | - | - | 90 | - |
| SSBR^{d)} | phr | - | - | - | 90 |
| Kieselsäure^{e)} | phr | 95 | 95 | 95 | 95 |
| Silan^{f)} | phr | 6,84 | 6,84 | 6,84 | 6,84 |
| TDAE | phr | 35 | 35 | 35 | 35 |
| Alterungsschutzmittel | phr | 4 | 4 | 4 | 4 |
| ZnO | phr | 2,5 | 2,5 | 2,5 | 2,5 |
| Stearinsäure | phr | 2,5 | 2,5 | 2,5 | 2,5 |
| Beschleunigers^{g)} | phr | 4 | 4 | 4 | 4 |
| Schwefel | phr | 2 | 2 | 2 | 2 |
| | | | | | |
| Shore Härte b. RT | Shore A | 74 | 68 | 69 | 72 |
| Shore Härte b. 70°C | Shore A | 70 | 65 | 66 | 69 |
| Rückprallelast. b. 70°C | % | 45 | 51 | 54 | 55 |
| Zugfestigkeit | MPa | 13 | 16 | 17,5 | 13,5 |
| Reißdehnung | % | 441 | 528 | 533 | 454 |
| Modul 300 | MPa | 9,6 | 7,8 | 8,2 | 8,3 |
| T_{g} der Kautschukm. | °C | - 85 | -51 | -52 | -61 |

### Verwendete Substanzen aus Tabelle 1:

^{a)} BR: Polybutadien, Hoch-cis , Nd-katalysierter Butadienkautschuk, unfunktionalisiert, Tg = -105°C, Europrene^{®} NEOCIS BR 40, Fa. Polimeri
^{b)} SSBR: Styrol-Gehalt = 10,4 Gew.-%; Vinyl-Anteil = 8,6 Gew-%; Blockstyrol-Gehalt = 5 %; Tg = - 83°C; M_{w} = 515249 g/mol; Mₙ = 356031 g/mol; Mooney-Viskosität = 64,1; modifiziert mit

   IV) (MeO)₂(Me)Si-(CH₂)₂-S-SiMe₂C(Me)₃
^{c)} SSBR: Styrol-Gehalt = 10,5 Gew.-%; Vinyl-Anteil = 8,8 Gew-%; Blockstyrol-Gehalt = 9 %; Tg = - 83°C; M_{w} = 475141 g/mol; Mₙ = 343274 g/mol; Mooney-Viskosität = 65,5; modifiziert mit

   IV) (MeO)₂(Me)Si-(CH₂)₂-S-SiMe₂C(Me)₃ und

   V) (MeO)₃Si-(CH₂)₂-S-SiMe₂C(Me)₃
^{d)} SSBR: Styrol-Gehalt = 0 Gew.-%; Vinyl-Anteil = 8 Gew-%; Tg = -94°C; modifiziert mit

   IV) (MeO)₂(Me)Si-(CH₂)₂-S-SiMe₂C(Me)₃ und

   V) (MeO)₃Si-(CH₂)₂-S-SiMe₂C(Me)₃
^{e)} Kieselsäure: ULTRASIL® VN3, Fa. Evonik
^{f)} Silan Si 261®, Fa. Evonik
^{g)} Beschleuniger: DPG (Diphenylguanidin) und CBS (N-Cyclohexyl-2-benzothiazolsufenamid)

Wie aus Tabelle 1 hervorgeht, zeigen die erfindungsgemäßen Kautschukmischungen E1, E2 und E3 überraschend eine größere Rückprallelastizität bei 70°C als V1, obwohl die Glasübergangstemperaturen Tg von E1, E2 und E3 jeweils größer sind als die von V1. Eine größere Rückprallelastizität bei 70°C ist ein Indikator für ein verbessertes Rollwiderstandsverhalten. Gleichzeitig bleiben die übrigen physikalischen Eigenschaften nahezu auf gleichem Niveau. Somit ist es mit der erfindungsgemäßen Kautschukmischung möglich, insbesondere durch den Einsatz im Laufstreifen, den Rollwiderstand von Fahrzeugreifen auf Basis des Standes der Technik weiter zu verbessern ohne dass sich die anderen Reifeneigenschaften verschlechtern.

**Tabelle 2**

| **Bestandteile** | **Einheit** | **V2** | **E4** | **E5** | **E6** |
|---|---|---|---|---|---|
| NR TSR | phr | 20 | 20 | 20 | 20 |
| SSBR^{a)} | phr | 10 | 29 | 29 | 34 |
| SSBR^{b)} | phr | 70 | - | - | - |
| SSBR^{c)} | phr | - | 51 | - | - |
| SSBR^{d)} | phr | - | - | 51 | - |
| SSBR^{e)} | phr | - | - | - | 46 |
| Kieselsäure^{f)} | phr | 95 | 95 | 95 | 95 |
| Silan^{g)} | phr | 6,84 | 6,84 | 6,84 | 6,84 |
| TDAE | phr | 35 | 45 | 45 | 35 |
| Alterungsschutzmittel | phr | 4 | 4 | 4 | 4 |
| ZnO | phr | 2,5 | 2,5 | 2,5 | 2,5 |
| Stearinsäure | phr | 2,5 | 2,5 | 2,5 | 2,5 |
| Beschleuniger^{h)} | phr | 4 | 4 | 3,6 | 3,6 |
| Schwefel | phr | 2 | 2 | 2 | 2 |
| | | | | | |
| Shore Härte b. RT | Shore A | 71 | 64 | 63 | 69 |
| Shore Härte b. 70°C | Shore A | 66 | 60 | 59 | 66 |
| Rückprallelast. b. 70°C | % | 49 | 51 | 53 | 53 |
| Zugfestigkeit | MPa | 17,3 | 15 | 14,2 | 15 |
| Reißdehnung | % | 555 | 548 | 503 | 489 |
| Modul 300 | MPa | 8,4 | 7 | 7,4 | 8,9 |
| T_{g} der Kautschukmischung | °C | -30 | -31 | -33 | -31 |
| Abrieb | mm³ | 129 | 102 | 96 | 117 |

### Verwendete Substanzen aus Tabelle 2:

^{a)} SSBR: Styrol-Gehalt = 21 Gew.-%, Vinyl-Anteil = ca. 61 Gew-%, Tg = -25°C, funktionalisiert mit Hydroxy-Gruppen, Nipol® NS 616, Fa. Nippon Zeon
^{b)} SSBR: Styrol-Gehalt = 15 Gew.-%, Vinyl-Anteil = ca. 25 Gew-%, Tg = - 65°C, funktionalisiert mit Hydroxy-Gruppen, Nipol® NS 612, Fa. Nippon Zeon
^{c)} SSBR: Styrol-Gehalt = 10,4 Gew.-%; Vinyl-Anteil = 8,6 Gew-%; Blockstyrol-Gehalt = 5 %; Tg = - 83°C; M_{w} = 515249 g/mol; Mₙ = 356031 g/mol; Mooney-Viskosität = 64,1; modifiziert mit

   IV) (MeO)₂(Me)Si-(CH₂)₂-S-SiMe₂C(Me)₃
^{d)} SSBR: Styrol-Gehalt = 10,5 Gew.-%; Vinyl-Anteil = 8,8 Gew-%; Blockstyrol-Gehalt = 9 %; Tg = - 83°C; M_{w} = 475141 g/mol; Mₙ = 343274 g/mol; Mooney-Viskosität = 65,5; modifiziert mit

   IV) (MeO)₂(Me)Si-(CH₂)₂-S-SiMe₂C(Me)₃ und

   V) (MeO)₃Si-(CH₂)₂-S-SiMe₂C(Me)₃
^{e)} SSBR: Styrol-Gehalt = 0 Gew.-%; Vinyl-Anteil = 8 Gew-%; Tg = -94°C; modifiziert mit

   IV) (MeO)₂(Me)Si-(CH₂)₂-S-SiMe₂C(Me)₃ und

   V) (MeO)₃Si-(CH₂)₂-S-SiMe₂C(Me)₃
^{f)} Kieselsäure: ULTRASIL® VN3, Fa. Evonik
^{g)} Silan Si 261®, Fa. Evonik
^{h)} Beschleuniger: DPG (Diphenylguanidin) und CBS

Wie aus Tabelle 2 hervorgeht, zeigen die erfindungsgemäßen Kautschukmischungen E4, E5 und E6 bei gleicher Glasübergangstemperatur (der Kautschukmischung) wie ihre Vergleichsmischung V2 verbesserte Abriebs- und Rollwiderstandseigenschaften (s. Rückprallelastizitäten bei 70°C). Somit ist es durch die gezielte Kombination des funktionalisierten Styrol-Butadien-Kautschuks mit einem Styrol-Gehalt von 0 bis 12 Gew.-% und einer Glasübergangstemperatur von -120 bis -75°C und Kautschuken mit einer vergleichsweise hohen Glasübergangstemperatur (Hoch-Tg-SSBR) in der erfindungsgemäßen Kautschukmischungen möglich, den Anteil des Hoch-Tg-Kautschuks zu erhöhen und somit gleichzeitig die Abrieb- und Rollwiderstandseigenschaften der Kautschukmischung zu verbessern. Gleichzeitig bleiben die übrigen physikalischen Eigenschaften nahezu auf gleichem Niveau.

## Patentansprüche

1. Schwefelvernetzbare Kautschukmischung, **dadurch gekennzeichnet, dass** sie wenigstens die folgenden Bestandteile enthält:
- 5 bis 95 phr zumindest eines Styrol-Butadien-Kautschuks, der mit Phthalocyanin-Gruppen und/oder Hydroxy-Gruppen und/oder Epoxy-Gruppen und/oder Silan-Sulfid-Gruppen funktionalisiert ist und dessen Styrol-Gehalt 0 bis 12 Gew.-% beträgt und der im unvulkanisierten Zustand eine Glasübergangstemperatur (T_{g}) gemäß DSC von -75 bis -120°C aufweist, und
- 5 bis 95 phr zumindest eines weiteren Kautschuks und
- 20 bis 300 phr zumindest einer Kieselsäure.

2. Schwefelvernetzbare Kautschukmischung nach Anspruch 1, **dadurch gekennzeichnet, dass** sie 5 bis 20 phr natürliches Polyisopren und/oder 5 bis 20 phr synthetisches Polyisopren enthält.

3. Schwefelvernetzbare Kautschukmischung nach einem der vorherigen Ansprüche, **dadurch gekennzeichnet, dass** der mit Phthalocyanin-Gruppen und/oder Hydroxy-Gruppen und/oder Epoxy-Gruppen und/oder Silan-Sulfid-Gruppen funktionalisierte Styrol-Butadien-Kautschuk einen Vinyl-Anteil von 7 bis 12 Gew.-% aufweist.

4. Schwefelvernetzbare Kautschukmischung nach einem der vorherigen Ansprüche, **dadurch gekennzeichnet, dass** sie 10 bis 70 phr eines mit Phthalocyanin-Gruppen und/oder Hydroxy-Gruppen und/oder Epoxy-Gruppen und/oder Silan-Sulfid-Gruppen funktionalisierten Styrol-Butadien-Kautschuks mit einer T_{g} von -75 bis -120°C sowie 10 bis 70 phr eines lösungspolymerisierten Styrol-Butadien-Kautschuks mit einer Glasübergangstemperatur von -40 bis +10°C enthält.

5. Schwefelvernetzbare Kautschukmischung nach Anspruch 4, **dadurch gekennzeichnet, dass** der funktionalisierte Styrol-Butadien-Kautschuk mit einer Tg von -75 bis -120°C mit Silan-Sulfid-Gruppen funktionalisiert ist.

6. Schwefelvernetzbare Kautschukmischung nach einem der Ansprüche 1 bis 4, **dadurch gekennzeichnet, dass** der mit Phthalocyanin-Gruppen und/oder Hydroxy-Gruppen und/oder Epoxy-Gruppen und/oder Silan-Sulfid-Gruppen funktionalisierte Styrol-Butadien-Kautschuk eine Glasübergangstemperatur (Tg) gemäß DSC von -80 bis-110°C aufweist.

7. Fahrzeugreifen, **dadurch gekennzeichnet, dass** er in wenigstens einem Bauteil eine schwefelvernetzbare Kautschukmischung nach einem der vorhergehenden Ansprüche enthält.

8. Fahrzeugreifen nach Anspruch 7, **dadurch gekennzeichnet, dass** es sich bei dem Bauteil um einen Laufstreifen und/oder eine Seitenwand handelt.

9. Verwendung einer Kautschukmischung nach einem der Ansprüche 1 bis 6 zur Herstellung eines Fahrzeugreifens.

10. Verwendung einer Kautschukmischung nach einem der Ansprüche 1 bis 6 zur Herstellung eines Gurtes, Riemens oder Schlauches.

## Claims

1. Sulfur-crosslinkable rubber mixture, **characterized in that** it comprises at least the following constituents:
- 5 to 95 phr of at least one styrene-butadiene rubber, which is functionalized with phthalocyanine groups and/or hydroxy groups and/or epoxy groups and/or silane sulfide groups, has a styrene content of 0 to 12 wt%, and has a glass transition temperature (Tg) in the unvulcanized state according to DSC of -75 to -120°C,
- 5 to 95 phr of at least one further rubber, and
- 20 to 300 phr of at least one silicic acid.

2. Sulfur-crosslinkable rubber mixture according to Claim 1, **characterized in that** it comprises 5 to 20 phr of natural polyisoprene and/or 5 to 20 phr of synthetic polyisoprene.

3. Sulfur-crosslinkable rubber mixture according to one of the preceding claims, **characterized in that** the styrene-butadiene rubber functionalized with phthalocyanine groups and/or hydroxy groups and/or epoxy groups and/or silane sulfide groups has a vinyl content of 7 to 12 wt%.

4. Sulfur-crosslinkable rubber mixture according to one of the preceding claims, **characterized in that** it contains 10 to 70 phr of a styrene-butadiene rubber having a Tg of -75 to -120°C and 10 to 70 phr of a solution-polymerized styrene-butadiene rubber having a glass transition temperature of - 40 to +10°C functionalized with phthalocyanine groups and/or hydroxy groups and/or epoxy groups and/or silane sulfide groups.

5. Sulfur-crosslinkable rubber mixture according to Claim 4, **characterized in that** the styrene-butadiene rubber having a Tg of -75 to -120°C is functionalized with silane sulfide groups.

6. Sulfur-crosslinkable rubber mixture according to one of Claims 1 through 4, **characterized in that** the styrene-butadiene rubber functionalized with phthalocyanine groups and/or hydroxy groups and/or epoxy groups and/or silane sulfide groups has a glass transition temperature (Tg) according to DSC of -80 to -110°C.

7. Vehicle tire, **characterized in that** it contains a sulfur-crosslinkable rubber mixture according to one of the preceding claims in at least one component.

8. Vehicle tire according to claim 7, **characterized in that** the component is a tread and/or a side wall.

9. Use of a rubber mixture according to one of Claims 1 through 6 for manufacturing a vehicle tire.

10. Use of a rubber mixture according to one of Claims 1 through 6 for manufacturing a strap, belt, or hose.

## Revendications

1. Mélange de caoutchouc réticulable par le soufre, **caractérisé en ce qu'**il contient au moins les constituants suivantes :
- 5 à 95 parties par cent parties d'au moins un caoutchouc de styrène-butadiène qui est fonctionnalisé par des groupes phtalocyanine et/ou des groupes hydroxy et/ou des groupes époxy et/ou des groupes sulfure de silane et dont la teneur en styrène est de 0 à 12% en poids et qui présente, dans l'état non vulcanisé, une température de transition vitreuse (Tg) selon DSC (calorimétrie différentielle à balayage) de -75 à -120°C et
- 5 à 95 parties par cent parties d'au moins un autre caoutchouc et
- 20 à 300 parties par cent parties d'au moins une silice.

2. Mélange de caoutchouc réticulable par le soufre selon la revendication 1, **caractérisé en ce qu'**il contient 5 à 20 parties par cent parties de polyisoprène naturel et/ou 5 à 20 parties par cent parties de polyisoprène synthétique.

3. Mélange de caoutchouc réticulable par le soufre selon l'une quelconque des revendications précédentes, **caractérisé en ce que** le caoutchouc de styrène-butadiène fonctionnalisé par des groupes phtalocyanine et/ou des groupes hydroxy et/ou des groupes époxy et/ou des groupes sulfure de silane présente une proportion de vinyle de 7 à 12% en poids.

4. Mélange de caoutchouc réticulable par le soufre selon l'une quelconque des revendications précédentes, **caractérisé en ce qu'**il contient 10 à 70 parties par cent parties d'un caoutchouc de styrène-butadiène fonctionnalisé par des groupes phtalocyanine et/ou des groupes hydroxy et/ou des groupes époxy et/ou des groupes sulfure de silane présentant une Tg de -75 à -120°C ainsi que 10 à 70 parties par cent parties d'un caoutchouc de styrène-butadiène polymérisé en solution présentant une température de transition vitreuse de -40 à +10°C.

5. Mélange de caoutchouc réticulable par le soufre selon la revendication 4, **caractérisé en ce que** le caoutchouc de styrène-butadiène fonctionnalisé présentant une Tg de -75 à -120°C est fonctionnalisé par des groupes sulfure de silane.

6. Mélange de caoutchouc réticulable par le soufre selon l'une quelconque des revendications 1 à 4, **caractérisé en ce que** le caoutchouc de styrène-butadiène fonctionnalisé par des groupes phtalocyanine et/ou des groupes hydroxy et/ou des groupes époxy et/ou des groupes sulfure de silane présente une température de transition vitreuse (Tg) selon DSC de -80 à -110°C.

7. Pneumatique pour véhicule, **caractérisé en ce qu'**il contient, dans au moins un élément, au moins un mélange de caoutchouc réticulable par le soufre selon l'une quelconque des revendications précédentes.

8. Pneumatique pour véhicule selon la revendication 7, **caractérisé en ce qu'**il s'agit, pour l'élément, d'une bande de roulement et/ou d'un flanc.

9. Utilisation d'un mélange de caoutchouc selon l'une quelconque des revendications 1 à 6 pour la fabrication d'un pneumatique pour véhicule.

10. Utilisation d'un mélange pour caoutchouc selon l'une quelconque des revendications 1 à 6 pour la fabrication d'une ceinture, d'une courroie ou d'un tuyau souple.
